(19) Europäisches Patentamt
European Patent Office
Office européen des brevets

(11) **EP 3 399 586 A1**

(12) **EUROPEAN PATENT APPLICATION**

(43) Date of publication:
**07.11.2018 Bulletin 2018/45**

(51) Int Cl.:
**H01M 12/06** (2006.01)      H01M 4/38 (2006.01)

(21) Application number: **17305499.0**

(22) Date of filing: **04.05.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **CENTRE NATIONAL DE LA RECHERCHE SCIENTIFIQUE**
**75016 Paris (FR)**

• **Université de Picardie Jules Verne**
**80025 Amiens Cedex 1 (FR)**

(72) Inventors:
• **TORAYEV, Amangeldi**
**80000 AMIENS (FR)**
• **SHUKLA, Garima**
**80000 AMIENS (FR)**
• **FRANCO, Alejandro**
**60500 CHANTILLY (FR)**

(74) Representative: **Lavoix et al**
**2, place d'Estienne d'Orves**
**75441 Paris Cedex 09 (FR)**

(54) **METAL-AIR BATTERY**

(57)      The invention concerns a metal-air battery (10) comprising a stack having an axis and a first and a second end along the axis. The stack comprises a cathode (12) arranged at the first end of the stack and comprising a porous material, a metal anode (14) arranged at the second end of the stack, a separator (13) arranged between the anode (14) and the cathode (12), the separator (13) comprising an electrolyte, and a current collector (15). The cathode (12) is adapted to allow the passage of air or oxygen containing gas mixture into the electrolyte from an air inlet interface arranged next to the cathode (12) opposite to the separator (13). The battery (10) further comprises a magnet (17, 19) having a magnetic axis, the magnet (17, 19) being arranged next to the anode (14) opposite to the separator (13), wherein the magnetic axis is parallel to the axis of the stack.

Fig. 3

**Description**

The present invention relates to a metal-air battery.

Advanced electronic equipment and, in particular, electric vehicle applications have been fast developing, resulting in an ever-increasing demand for high energy density and high power density power sources. The growing interest in metal-air batteries, also called metal-oxygen batteries, with metals such as magnesium, calcium, zinc, or sodium, and particularly lithium-air batteries is due to their theoretical specific energy densities which are significantly higher than those of current lithium-ion batteries with two solid state intercalation electrodes. This is thanks to the fact that the positive electrode active material, which is oxygen gas ($O_2$), is not stored internally in the battery. Metal-air batteries produce energy from the oxidation of metal using the oxygen of surrounding air. The oxygen enters through an inlet and through a porous cathode into the cell, where an oxygen reduction reaction takes place. The metal ion delivered from a metal negative electrode and the oxygen react at the porous positive electrode/electrolyte interface to form metal oxides and metal peroxides during the discharge process. During the charge process, the oxides decompose to release metal ions and oxygen again.

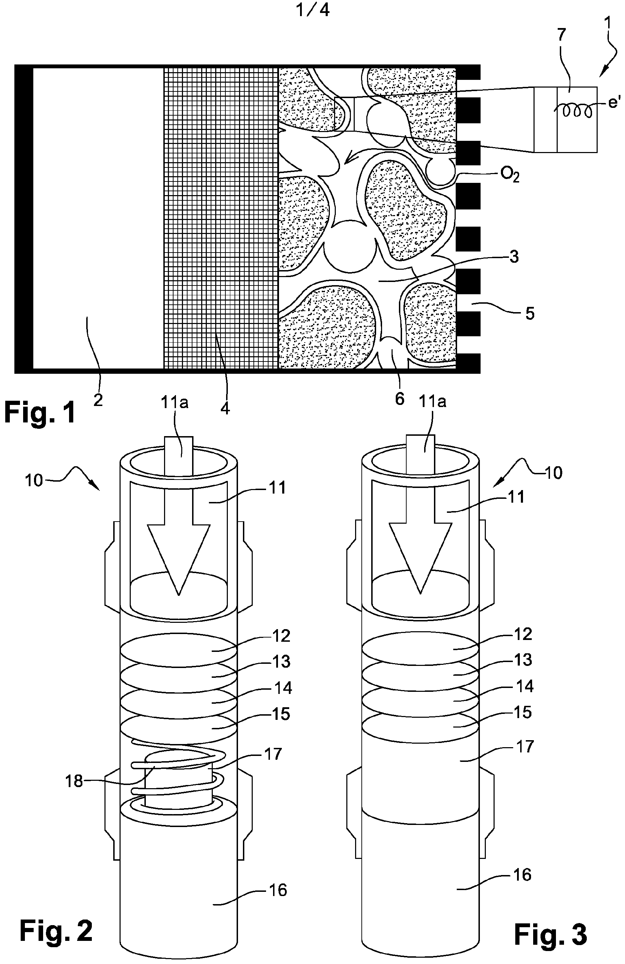

Operating metal-air batteries basically face two major problems, namely pore clogging and slow $O_2$ diffusion. These problems are described in the following for the example of a lithium (Li)-air battery, of which a schematic view is presented in Figure 1.

A Li-air battery 1 substantially comprises, in a housing, an anode 2 made of solid lithium and a cathode 3 made of a porous material. The negative electrode 2 is separated from the positive electrode by a separator 4 made of electrically insulating, mechanically resistant material impregnated with an ionic conducting electrolyte. The cathode 3 has an air inlet side 5 to permit the passage of air, and thus oxygen, from outside into the housing of the battery 1.

In $LiO_2$ batteries, one well-known reason of premature battery breakdown is the clogging of pores at the $O_2$ inlet 5 of the positive electrode 3. Due to the limited solubility and, consequently, low concentration of oxygen in the electrolyte compared to the concentration of lithium salt in the electrolyte, the electrochemical reaction zone is shifting towards the air inlet side of the positive electrode 3. This phenomenon facilitates the production of much larger amounts of the solid discharge product $Li_2O_2$ mainly at the gas inlet side. The discharge product is deposited on the surface of the cathode material particles as illustrated in Fig. 1, which narrows the pores and thus hinders oxygen diffusion through the cathode. The pore narrowing can lead to clogging, thereby filling up the pore volume and finally leading to complete blocking of the $O_2$ transport. The accumulation of the discharge product $Li_2O_2$ within the cathode 3 is illustrated in Figure 1 as particles 6 filling the space in the porous cathode 3 and as film 7 deposited on the porous material. This problem becomes more significant with increasing discharge rates. Higher current densities lead to an increasingly inhomogeneous distribution of discharge products.

Another serious challenge is the sluggish oxygen diffusion within the electrolyte. Before discharge, the electrolyte is saturated with oxygen, but during discharge the oxygen consumption rate exceeds the rate at which the oxygen is transported from the air inlet side through the electrolyte to the bulk of the porous electrode. Subsequently, a gradient of oxygen concentration is produced along the electrode thickness. This gradient can also cause inhomogeneous distribution of discharge products along the electrode thickness. The problem of the oxygen concentration gradient becomes more pronounced for high current densities as the oxygen consumption rate increases. This results in an inhomogeneous distribution of the $Li_2O_2$ discharge product.

The mentioned problems also occur in metal-air batteries with metals other than lithium.

To tackle the problems described hereinabove, the following approaches have been presented previously.

Firstly, there have been some attempts to modify the physical structure of the cathode.

A cathode structure with large pores is the most commonly suggested solution, as described, for example, in C. Chervin et al., "Carbon Nanofoam-Based Cathodes for Li-O2 Batteries: Correlation of Pore-Solid Architecture and Electrochemical Performance", J. Electrochem. Soc., A1510 (2013). To summarize, if the pores of a cathode are relatively large (i.e., around 50-200 nm), they will not be blocked easily by solid battery discharge products. Therefore, if the average pore size of the cathode is increased, the discharge capacity of the battery may be increased. However, this approach does not affect the spatially inhomogeneous distribution of the discharge product; it only delays the gas inlet clogging time since it takes longer time for particles to grow and fill up the pore volume. Furthermore, the pore size cannot be increased indefinitely, otherwise electrical conductivity and active surface area are compromised.

Another approach to avoid gas inlet clogging is the use of electrode structures with a porosity gradient. The cathode is designed to have larger pores at the gas inlet side than at the separator side. However, engineering an electrode with such a design, and without compromising its electric conductivity, is very difficult and cumbersome.

Secondly, mitigation strategies using modified electrolytes have also been proposed.

For example, electrolytes offering enhanced $O_2$ diffusion can be employed, as described, for example, in Zheng et al., "High-rate oxygen reduction in mixed nonaqueous electrolyte containing acetonitrile", Chem. Asian J., 3306 (2011). Herein, an electrolyte solvent consisting of acetonitrile mixed with propylene carbonate is suggested. This electrolyte has low viscosity, fast $O_2$ dif-

fusion, and higher $O_2$ solubility, but it does not offer a solution to the problem of clogged pores.

Electrolytes like dimethoxyethane (DME), with a low donor number resulting in poor $LiO_2$ solubility, can also be used. In this case, the discharge products form an electronically insulating film on the surface of the electrode, the thickness of which is restricted to a few nanometers due to the limited electron tunneling distance. This is described, for example, in Johnson et al., "The role of LiO2 solubility in O2 reduction in aprotic solvents and its consequences for Li-O2 batteries", Nat. Chem., 1091 (2014). Thus, cathode pores with radii larger than the electron tunneling distance are prevented from clogging. However, this approach still suffers from low a discharge capacity of the battery because the solid discharge products form a thin film on the surfaces of the cathode, thereby passivating the active surface area of the same available for the desired electrochemical reactions.

An object of the present invention is to provide a metal-air battery where the aforementioned disadvantages of the prior art are greatly reduced or avoided. In particular, it is an object of the present invention to provide a metal-air battery in which the effects of cathode pore clogging and sluggish $O_2$ diffusion within the electrolyte are minimized.

According to a first aspect, embodiments of the present invention provide a metal-air battery comprising a stack having an axis and a first and a second end along the axis. The stack comprises a metal anode arranged at the first end of the stack, a cathode arranged at the second end of the stack and comprising a porous material, a separator arranged between the anode and the cathode and comprising an electrolyte, and a current collector. The cathode is adapted to allow the passage of air or an $O_2$ containing gas mixture into the electrolyte from an air inlet interface arranged next to the cathode opposite to the separator. The battery further comprises a magnet having a magnetic axis, the magnet being arranged next to the anode opposite to the separator, wherein the magnetic axis is parallel to the axis of the stack.

The metal-air battery according to embodiments of the present invention provides a solution to the problems of clogging of the cathode pores with the discharge product and of the slow diffusion of oxygen. The magnetic field generated by the magnet introduces an external physical force which is able to accelerate diffusion of the oxygen within the electrolyte. It is fortuitous that the active material for metal-air batteries, namely oxygen, and the intermediate discharge product of $LiO_2$ are paramagnetic in nature. A molecular orbital approach of molecular oxygen reveals the presence of two unpaired electrons that may orient themselves according to the axis of a magnetic field. Due to their paramagnetic nature, the oxygen molecules and the metal oxide molecules, such as $LiO_2$, are attracted towards a magnet. This means that the oxygen and metal oxide molecules will move under a gradient of magnetization from a region of lower magnetic fields to regions of higher magnetic fields. In such conditions, the molecules experience a magnetic force $F_m$, also called Kelvin force, described by the following equation:

$$F_m = (\chi/2\mu_0)\nabla B^2$$

Herein, the force $F_m$ experienced by the paramagnetic molecules is calculated using the magnetic susceptibility $\chi$ of a species, the magnetic permeability $\mu_0$ of the vacuum (which is assumed here for simplification), and the value of the gradient $\nabla$ of the magnetic field $B$ generated by the magnet.

Therefore, the oxygen and paramagnetic metal oxide molecules drift away from the air inlet interface and enter the central part and the part next to the separator of the cathode under the influence of the magnet placed behind the separator and the anode. Thus, a more homogenous distribution of solid metal peroxide discharge products, such as $Li_2O_2$, is obtained along the thickness of the porous cathode because the metal peroxide is formed from reduction of the soluble and paramagnetic metal oxide species.

Consequently, thanks to the introduction of a Kelvin force into the battery, pore clogging of the cathode at the air inlet side can be greatly reduced, allowing the battery to undergo deeper discharge and hence to offer a higher specific capacity. The transport of paramagnetic species, namely oxygen and metal oxide is improved, which elevates the rate capability of the metal air battery.

These advantages and effects can be achieved without replacing any battery material or making significant changes to battery architecture. Any available materials for the electrodes and the electrolyte may be used without compromising the effects and advantages of the present invention.

According to embodiments of the invention, the metal-air battery further comprises a plain piston arranged next to the metal anode opposite to the separator and a hollow piston arranged next to the cathode opposite to the separator. The hollow piston is adapted to allow the passage of air into the cathode.

Advantageously, the plain piston may comprise the current collector.

According to some embodiments, the magnet may be a permanent magnet. According to an example, the permanent magnet may be made of neodymium.

According to other embodiments, the magnet may be constituted by a solenoid through which an electric current is flowing. Thereby, a magnetic field having its magnetic axis parallel to the axis of the stack is generated.

The electric current used for the generation of the magnetic field may be the current produced by the battery. The electric current may also be an externally applied current.

According to an example, the value of the electric current may be varying. Thereby, the generated magnetic field may be provided with a temporal gradient.

According to another embodiment, the metal-air battery may comprise a second solenoid having a magnetic axis, the solenoid being arranged next to the cathode opposite to the separator, wherein the magnetic axis is parallel to the axis of the stack.

Thanks to this additional solenoid, where a current shall be applied when the battery is charging, the $O_2$ diffusion within the cathode may be increased, so that the oxygen release out of the cathode is enhanced, also during the charging of the battery. Therefore, $O_2$ diffusion may be increased, and the effects and advantages mentioned above may be achieved during the whole cycling of the battery. The metal of the anode may be one of lithium, magnesium, calcium, sodium, and zinc.

The porous material of the cathode may be carbon black, gold, titanium carbide, graphene oxide, or other porous electrode materials.

As an example, the cathode may comprise a stainless steel mesh coated with carbon black.

According to a second aspect, embodiments of the present invention provide the use of a magnet in a metal-air battery according to the first aspect of the invention.

Exemplary embodiments of the invention according to this disclosure are described with reference to the accompanying drawings, in which:

Fig. 1, already described, shows a schematic sectional view of a lithium-air battery;

Fig. 2 shows a schematic view of a metal-air battery according to a first embodiment;

Fig. 3 shows a schematic view of a metal-air battery according to a second embodiment;

Fig. 4 shows a schematic view of a metal-air battery according to a third embodiment;

Fig. 5 shows a schematic view of a metal-air battery according to a fourth embodiment;

Fig. 6 shows a schematic view of a metal-air battery according to a fifth embodiment;

Fig. 7 shows, as an example, discharge capacities of a lithium-air battery according to an embodiment and a lithium-air battery of the prior art; and

Fig. 8 shows, as an example, current responses of a lithium-air battery according to an embodiment and a lithium-air battery of the prior art.

In the Figures, elements with similar structures and/or functions may be denoted by like reference numerals.

The figures and the following detailed description illustrate exemplary embodiments of the invention, but the invention is not limited to said embodiments.

Figures 2-5 illustrate various embodiments of a metal-air battery 10 according to the present invention in schematic views. The shown metal-air batteries 10 are of the Swagelok type. However, the metal-air battery according to the present invention may be of any other stacked assembly type.

The metal-air battery 10 comprises a housing that is delimited by a hollow piston 11 at one side and a plain piston 16 at the opposite side. The hollow piston 11 acts as an air/oxygen inlet. It allows a flow 11 a of air into the housing of the battery 10. The housing is made of a solvent resistant material to resist corrosion that may be caused by the components (electrodes, electrolyte) of the battery 10. The solvent-resistant material may be aluminium, copper, stainless steel, polytetrafluoroethylene, polyethylene terephthalate, polyether ether ketone, polyphenylene ether, or the like.

Within the housing, the metal-air battery 10 is constituted by a stack of layers constituting the battery. The stack can be defined by an axis and a first end and a second end. The stack comprises, successively along the axis beginning from the first end, a cathode 12, a separator 13, a metal anode 14, and a current collector 15. The cathode 12 is arranged at the air inlet side next to the hollow piston 11, and the anode 14 is arranged next to the plain piston 16. The two pistons 11, 16 are made of an electrically conducting material, e.g., stainless steel. The metal anode 14 is supported by the current collector 15. The cathode 12 is of a porous material allowing the diffusion of oxygen from air flowing through the hollow piston 11 towards the separator 13. The separator 13, sandwiched between the cathode 12 and the anode 14, is impregnated with an aqueous electrolyte. At its extremity next to the hollow piston 11, the cathode is delimitated by an air inlet interface (not shown). This interface may be constituted, for example, by a stainless steel mesh.

The electrolyte is an aqueous electrolyte, such as lithium salt (lithium bis-trifluoromethanesulfonimide, LiTFSI) and a solvent (triethylene glycol dimethyl ether, TEGDME) stored in the separator. The separator 13 may be in the form of a permeable membrane made of electrically insulating material. It allows the transport of the metal ions and electrons needed to close the electrical circuit of the battery 10. The membrane may be of a microporous polymer or of fiber glass.

The cathode 12 is implemented, for example, as a mesh of stainless steel coated with carbon black. Other porous, electrically conducting materials may also be used. As the cathode 12 is of a porous material, the electrolyte is also present within the cathode 12.

The metal of the anode 14 is one of lithium, magnesium, calcium, sodium, and zinc. Zinc and lithium are the most commonly used metals.

According to the invention, the metal-air battery 10 further advantageously comprises a magnet 17. The magnet 17 can be characterized by a magnetic axis. The magnet 17 is arranged within the battery 10 such that its magnetic axis is parallel to the axis of the battery stack.

According to embodiments illustrated in Figures 2 and 3, the magnet 17 is a permanent magnet 17 arranged between the plain piston 16 and the current collector 15.

In a first embodiment shown in Figure 2, the permanent magnet 17 is placed within a spring 18 that is connected to the plain piston 16 on one side and to a current collector disc 15 at the other side. The spring 18 is made of an electrically conducting material, for example, stainless steel. The current collector disc 15 supports the metal anode 14.

In a second embodiment shown in Figure 3, the permanent magnet 17 is a part of the plain piston 16. In this case, the magnet 17 is arranged between a current collector disc 15 supporting the anode 14 and the actual plain piston 16.

The permanent magnet 17 may be made, for example, of neodymium (NbFeB).

The gradient of magnetization across the total length of the stack of the battery, i.e., across the thickness of the current collector 15, the metal anode 14, the separator 13, and the porous cathode 12 is important for the paramagnetic oxygen entering from the air inlet interface to be attracted by the Kelvin force.

For example, the combined thickness of the current collector 15, a lithium anode 14, and the separator 13 may be about 1 mm. The thickness of the positive electrode 12 may be about 0.25 mm.

A disc shaped commercial neodymium magnet of N42 grade with a magnetic field strength of 0.56 T may be used. The magnetic field gradient along the positive electrode thickness, from the separator side to the air inlet side of the electrode 12, is then around 146 $Tm^{-1}$ in this example.

With a disc shaped NbFeB magnet of N52 grade with a magnetic field strength of 1.48 T, the magnetic field gradient along the positive electrode thickness, from the separator side to the air inlet side of the electrode 12, is then around 97 $Tm^{-1}$ in this example.

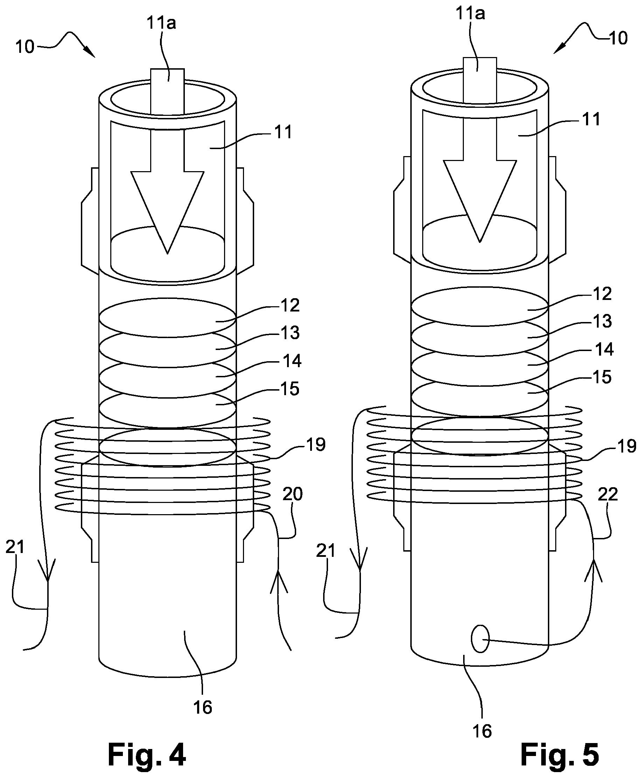

According to embodiments illustrated in Figures 4 and 5, the magnet 17 is an electromagnet 19. The electromagnet is constituted by a solenoid 19 or coil wound around the housing of the Swagelok cell, at the level of the plain piston 16, wherein an electric current is applied to the solenoid during discharge of the battery 10. The solenoid 19 is an insulated electrical conductor.

In a third embodiment shown in Figure 4, the solenoid 19 is connected to an external current source (not shown), as indicated by the electrical conductors 20, 21. The current loop for the electromagnet is galvanically separated from the battery current loop.

In a fourth embodiment shown in Figure 5, the current applied to the solenoid 19 is the current produced by the discharging battery 10. This is illustrated by the electrical conductors 21, 22. One of the conductors 22 is connected to the plain piston 16 of the battery 10. The other conductor 21 is connected to the cathode piston 11 through an external wire and load.

In the cases where the magnet used is an electromagnet, the current applied to the solenoid 19 may be constant or varying. If a constant current is applied, the generated magnetic field will be constant as well and have the same effect as the magnetic field of a permanent magnet. If a varying current is applied, the generated magnetic field will vary as well. This allows introducing a temporal gradient of magnetization within the battery. Therefore, it is possible to analyze the transport properties of oxygen subject to the Kelvin force in detail and to fine-tune these properties to obtain an optimum battery performance.

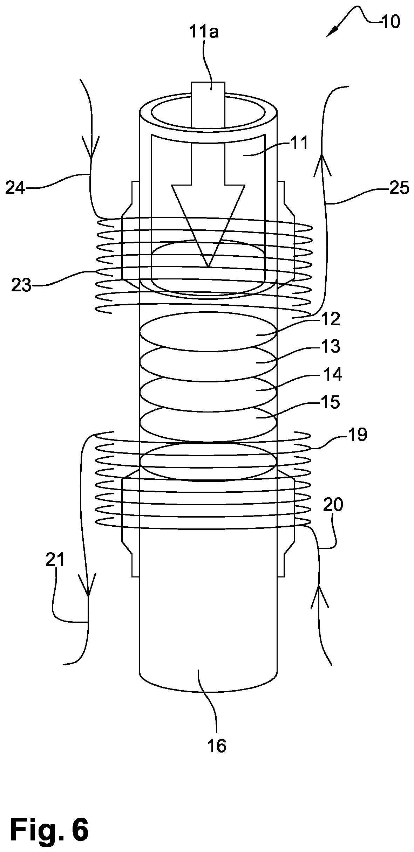

According to an embodiment, a solenoid may also be placed at the cathode side of the battery, as illustrated in Fig. 6. A second solenoid 23 or coil is wound around the housing of the Swagelok cell, at the level of the hollow piston 11. An electric current is applied to the solenoid 23 during charging of the battery 10 using electrical conductors 24, 25. The solenoid 23 is an insulated electrical conductor. Thanks to this second electromagnet 23, the $O_2$ diffusion will be increased also during the charging process of the battery 10.

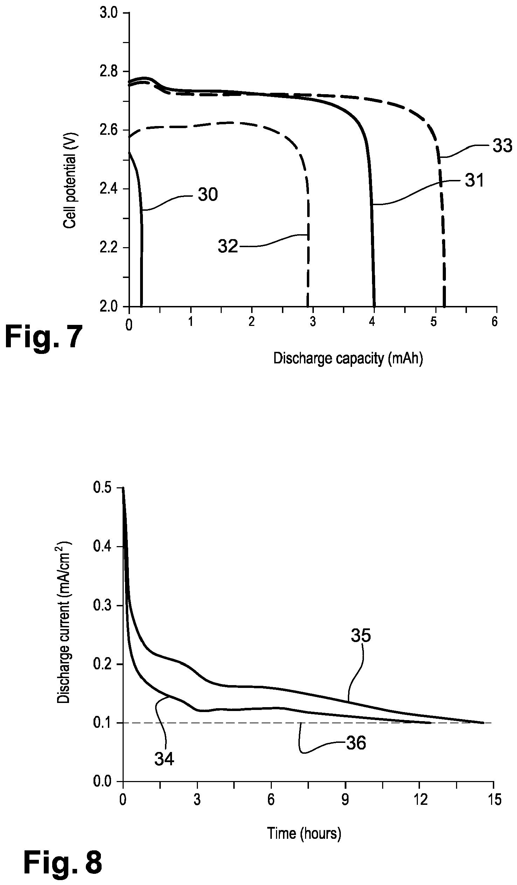

Figures 7 and 8 illustrate the discharge capacity and the current response, respectively, for a lithium-air battery according to embodiments disclosed herein in comparison with a standard lithium-air battery.

For these comparative studies, one Swagelok cell according to the present invention and a standard lithium-air Swagelok cell for reference have been placed in an airtight chamber flushed with oxygen, in order to insure the same environmental conditions for both batteries. Galvanostatic measurements have been carried out for current densities varying from 0.03 $mA/cm^2$ to 0.5 $mA/cm^2$.

Figure 7 shows the discharge capacities for lithium-air batteries having a 0.1 M $LiClO_4$ in a dimethyl sulfoxide solvent (DMSO) electrolyte. The solid lines 30, 31 correspond to standard batteries, and the dashed lines 32, 33 correspond to batteries according to the present invention. For a low current density (curves 31, 33; 0.03 $mA/cm^2$), the discharge capacity is increased of about 20% for the battery according to the invention with respect to the standard battery. For a high current density (curves 30, 32; 0.5 $mA/cm^2$), the discharge capacity is around 13 times higher for the inventive battery than for the standard battery.

Figure 8 shows the current response for lithium-air batteries having a 0.5M LiTFSI-TEGDME electrolyte. Potentiostatic experiments have been carried out, where the battery potential is set to 2.2 V. Curve 34 illustrates the current response of the standard battery, and curve 35 illustrates the current response of a battery according to the present invention. The total capacities acquired before reaching a 0.1 mA/cm$^2$ cut-off current density, depicted by a dotted line 36, are about 0.8 mAh for the standard battery and about 1.2 mAh for the inventive battery. Thus, the capacity of the battery according to the invention is around 50% higher than that of the reference battery.

Diamagnetic molecules that may be present in the electrolyte of the battery according to the invention do not hinder the effect of the magnetic field. Organic electrolyte molecules which may be weakly diamagnetic only have a small little influence on the paramagnetic behavior of the solvated oxygen molecules due to the small size of the latter. Any other strongly diamagnetic species that may be present in the electrolyte are repelled up to a certain extent, such as diamagnetic nitrogen gas molecules introduced through the air inlet. Therefore, the battery according to the invention may be used with air or pure oxygen indifferently, as the oxygen will still be dissolved in the electrolyte without being disturbed by the present of nitrogen molecules.

**Claims**

1. A metal-air battery (10) comprising a stack having an axis and a first and a second end along the axis, the stack comprising:

   - a cathode (12) arranged at the first end of the stack and comprising a porous material,
   - a metal anode (14) arranged at the second end of the stack,
   - a separator (13) arranged between the anode (14) and the cathode (12), the separator (13) comprising an electrolyte, and
   - a current collector (15),

   wherein the cathode (12) is adapted to allow the passage of air or an O$_2$ containing gas mixture into the electrolyte from an air inlet interface arranged next to the cathode (12) opposite to the separator (13), **characterized in that** the battery (10) further comprises a magnet (17, 19) having a magnetic axis, the magnet (17, 19) being arranged next to the anode (14) opposite to the separator (13), wherein the magnetic axis is parallel to the axis of the stack.

2. The metal-air battery (10) according to claim 1, further comprising:

   - a plain piston (16) arranged next to the metal anode (14) opposite to the separator (13), and
   - a hollow piston (11) arranged next to the cathode (12) opposite to the separator (13),

   wherein the hollow piston (11) is adapted to allow the passage of air or the O$_2$ containing gas mixture

into the cathode (12).

3. The metal-air battery (10) according to claim 2, wherein the plain piston (16) comprises the current collector (15).

4. The metal-air battery (10) according to one of claims 1 to 3, wherein the magnet (17, 19) is a permanent magnet (17).

5. The metal-air battery (10) according to claim 4, wherein the permanent magnet (17) is made of neodymium.

6. The metal-air battery (10) according to one of claims 1 to 3, wherein the magnet (17, 19) is an electromagnet (19).

7. The metal-air battery (10) according to claim 6, wherein the electromagnet (19) is a solenoid (19) through which an electric current is flowing.

8. The metal-air battery (10) according to claim 7, comprising a second solenoid having a magnetic axis, the solenoid being arranged next to the cathode (12) opposite to the separator (13), wherein the magnetic axis is parallel to the axis of the stack.

9. The metal-air battery (10) according to claim 7, wherein the electric current is a current produced by the battery (10).

10. The metal-air battery (10) according to claim 7 or 8, wherein the electric current is produced by an external current source.

11. The metal-air battery (10) according to claim 10, wherein the value of the electric current is varying.

12. The metal-air battery (10) according to any of the preceding claims, wherein the metal of the anode (14) is one of lithium, magnesium, calcium, sodium, and zinc.

13. The metal-air battery (10) according to any of the preceding claims, wherein the porous material of the cathode (12) is one of carbon black, gold, titanium carbide, graphene oxide, or other porous electrode materials.

14. The metal-air battery (10) according to claim 13, wherein the cathode (12) comprises a stainless steel mesh coated with carbon black.

15. Use of a magnet in a metal-air battery according to one of claims 1-14.

**Fig. 1**

**Fig. 2**

**Fig. 3**

Fig. 4

Fig. 5

**Fig. 6**

Fig. 7

Fig. 8

Europäisches
Patentamt

European
Patent Office

Office européen
des brevets

## EUROPEAN SEARCH REPORT

Application Number

EP 17 30 5499

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/35703 A1 (SECR DEFENCE [GB]; BIRKIN PETER [GB]; BOWEN CHRISTOPHER RHYS [GB]; DAY) 15 July 1999 (1999-07-15) | 1,3-7, 12-15 | INV. $H01M12/06$ |
| A | * page 5, line 5 - page 6, line 18; figure 1 * | 8-11 | ADD. $H01M4/38$ |
| X | KR 2012 0054315 A (HYUNDAI MOTOR CO LTD [KR]) 30 May 2012 (2012-05-30) | 1,3,5,6, 12-15 | |
| A | * paragraph [0018] - paragraph [0051]; figures 2,3,6 * | 7-11 | |
| A | US 2013/059213 A1 (TOMITA TOSHIHIRO [JP]) 7 March 2013 (2013-03-07) * paragraph [0023] - paragraph [0041]; figures 1-3 * | 1-15 | |
| A | CN 106 207 317 A (BEIJING INST OF MECH EQUIPMENT) 7 December 2016 (2016-12-07) * abstract; figure 1 * | 1-15 | |
| A | EP 2 528 138 A1 (PANASONIC CORP [JP]) 28 November 2012 (2012-11-28) * paragraph [0015] - paragraph [0033]; figure 5 * | 1-15 | TECHNICAL FIELDS SEARCHED (IPC) $H01M$ |

The present search report has been drawn up for all claims

| Place of search | Date of completion of the search | Examiner |
|---|---|---|
| The Hague | 26 October 2017 | Barenbrug-van Druten |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 30 5499

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2017

| Patent document cited in search report | | Publication date | Patent family member(s) | | Publication date |
|---|---|---|---|---|---|
| WO 9935703 | A1 | 15-07-1999 | AU 2063699 A<br>GB 2333887 A<br>WO 9935703 A1 | | 26-07-1999<br>04-08-1999<br>15-07-1999 |
| KR 20120054315 | A | 30-05-2012 | NONE | | |
| US 2013059213 | A1 | 07-03-2013 | NONE | | |
| CN 106207317 | A | 07-12-2016 | NONE | | |
| EP 2528138 | A1 | 28-11-2012 | EP 2528138 A1<br>JP 5080703 B2<br>JP WO2012093655 A1<br>US 2013004003 A1<br>WO 2012093655 A1 | | 28-11-2012<br>21-11-2012<br>09-06-2014<br>03-01-2013<br>12-07-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. CHERVIN et al.** Carbon Nanofoam-Based Cathodes for Li-O2 Batteries: Correlation of Pore-Solid Architecture and Electrochemical Performance. *J. Electrochem. Soc.,* 2013, A1510

- **ZHENG et al.** High-rate oxygen reduction in mixed nonaqueous electrolyte containing acetonitrile. *Chem. Asian J.,* 2011, 3306
- **JOHNSON et al.** The role of LiO2 solubility in O2 reduction in aprotic solvents and its consequences for Li-O2 batteries. *Nat. Chem.,* 2014, 1091